Europäisches Patentamt

European Patent Office

Office européen des brevets

(19)

(11) Numéro de publication : **0 006 383**

**B1**

(12) **FASCICULE DE BREVET EUROPÉEN**

(45) Date de publication du fascicule du brevet :
22.09.82

(21) Numéro de dépôt : 79400381.4

(22) Date de dépôt : 12.06.79

(51) Int. Cl.³ : **F 24 D 19/10, G 05 D 23/19**

(54) **Installation de chauffage central à régulation locale.**

(30) Priorité : 15.06.78 FR 7817996

(43) Date de publication de la demande :
09.01.80 (Bulletin 80/01)

(45) Mention de la délivrance du brevet :
22.09.82 Bulletin 82/38

(84) Etats contractants désignés :
**AT BE DE GB IT NL**

(56) Documents cités :
**BE - A - 841 601
DE - A - 2 253 511
DE - B - 2 714 511**

(73) Titulaire : **SAUNIER DUVAL EAU CHAUDE CHAUF-
FAGE S.D.E.C.C. - Société anonyme
6, rue Lavoisier
F-93107 Montreuil Cedex (FR)**

(72) Inventeur : **Gillant, Marc
40 Rue Gustave Simon
F-54000 Nancy (FR)**

(74) Mandataire : **Bressand, Georges et al
c/o CABINET LAVOIX 2 Place d'Estienne d'Orves
F-75441 Paris Cedex 09 (FR)**

## Installation de chauffage central à régulation locale.

La présente invention est relative à une installation de chauffage central comportant, répartis dans divers locaux, plusieurs radiateurs dont chacun est muni d'un robinet de réglage du débit d'eau chaude soumis à l'action d'un dispositif d'actionnement, auquel est associée une sonde de température située dans un local équipé d'au moins un radiateur, le ou les dispositifs d'actionnement et la sonde d'un même local étant reliés par un poste de commande central, unique, comprenant des moyens pour déterminer la température de consigne de chaque local et pour émettre un signal correspondant, ainsi que des moyens pour comparer un signal de température émis par la sonde avec le signal de température de consigne, et pour agir, en fonction de cette comparaison, sur le ou les robinets de réglage par l'intermédiaire du ou des dispositifs d'actionnement.

Dans le brevet BE-A-841 601 qui décrit une telle installation, le but visé est de régler automatiquement la température de chaque local individuel en fonction du moment de la journée, et à cet effet l'installation comporte dans un poste central un système de réglage programmé, comprenant notamment un programmateur, une mémoire à accès sélectif, un scrutateur et un dispositif de logique.

Le but de l'invention est de proposer une installation du type mentionné au début, qui, tout en assurant dans chaque local ou dans chaque groupe de locaux le respect d'une température de consigne, permet une régulation plus souple que dans l'installation connue par le BE-A-841 601, en assurant un contrôle grâce auquel les occupants des locaux sont incités à modérer leur demande de chauffage et par conséquent à éviter tout gaspillage d'énergie.

A cet effet l'installation suivant l'invention est caractérisée en ce que, à chaque ensemble comprenant une sonde et le ou les dispositifs d'actionnement de radiateur d'un même local correspond un module distinct du poste de commande comprenant un comparateur, et en ce que, à chaque module ou à chaque groupe de modules, est adjoint un dispositif de comptage donnant une indication pour les locaux chauffés de l'énergie consommée pour la production d'eau chaude.

Le dispositif d'actionnement de chaque robinet comporte avantageusement un bilame soumis à l'action d'une résistance électrique capable, en chauffant le bilame, de le déformer en fermant ainsi, à l'encontre de l'action d'un ressort, le clapet du robinet.

D'autres caractéristiques et avantages apparaîtront au cours de la description qui va suivre.

Au dessin annexé, donné uniquement à titre d'exemple :

la figure 1 est une vue schématique d'une installation selon l'invention ;

la figure 2 est une vue schématique d'un module élémentaire d'un poste de commande central d'une installation selon l'invention ;

la figure 3 est une vue schématique d'un dispositif de comptage de répartition d'une installation selon l'invention.

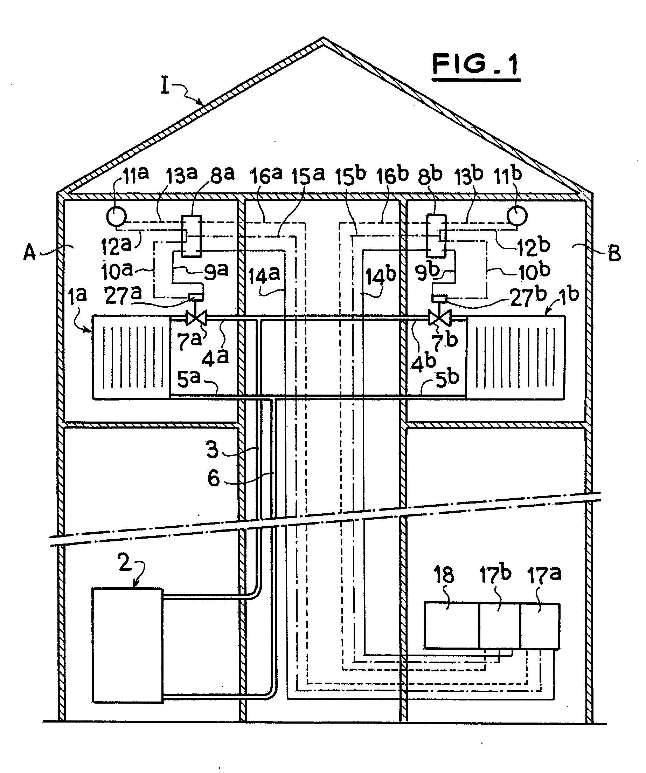

Suivant l'exemple représenté à la figure 1, l'invention s'applique à une installation de chauffage central d'un immeuble I à plusieurs étages (pour des facilités de représentation, seul un étage est représenté) comportant plusieurs locaux à chauffer, notamment des locaux A et B. Dans chaque local est placé un radiateur (1a pour le local A et 1b pour le local B) alimenté en eau chaude par une chaudière 2 commune, une conduite d'amenée 3 commune et des conduites d'amenée 4a et 4b distinctes pour les radiateurs respectifs 1a, 1b, des conduites 5a et 5b reliant la sortie des radiateurs 1a et 1b à la chaudière 2 par une conduite de retour commune 6. Chaque conduite d'amenée 4a, 4b est reliée au radiateur correspondant 1a ou 1b par un robinet de réglage (7a pour le radiateur 1a et 7b pour le radiateur 1b) soumis à l'action d'un dispositif d'actionnement électrique qui comporte, par exemple, un bilame situé dans la tête du robinet et susceptible d'être chauffé par une résistance électrique pour assurer la fermeture du clapet du robinet, à l'encontre de l'action d'un ressort sollicitant le clapet en position d'ouverture.

Le dispositif d'actionnement 27a, 27b du robinet 7a, 7b est relié à deux bornes d'un boîtier à bornes 8a, 8b, par deux fils électriques 9a ou 9b et 10a ou 10b. Dans chaque local est également située une sonde de mesure de température 11a, 11b reliée aux deux autres bornes du boîtier à bornes 8a, 8b par deux fils électriques 12a et 13a ou 12b et 13b. Chaque boîtier à bornes 8a, 8b de chaque local est relié par trois fils électriques (14a, 15a, 16a pour le local A et 14b, 15b, 16b pour le local B) à un module élémentaire (17a pour le local A et 17b pour le local B) d'un poste de commande central 18. Chacun des fils 15a, 15b est un fil de masse relié, dans le boîtier 8a, 8b, au fil 10a, 10b connecté au dispositif d'actionnement 27a, 27b du robinet 7a, 7b et au fil 12a, 12b de la sonde de mesure de température 11a, 11b. Chaque fil 9a, 9b relié au dispositif d'actionnement 27a, 27b est connecté au fil correspondant 14a, 14b connecté au module 17a, 17b, tandis que chaque fil 13a, 13b, relié à la sonde 11a, 11b, est connecté au fil correspondant 16a, 16b relié au module 17a, 17b.

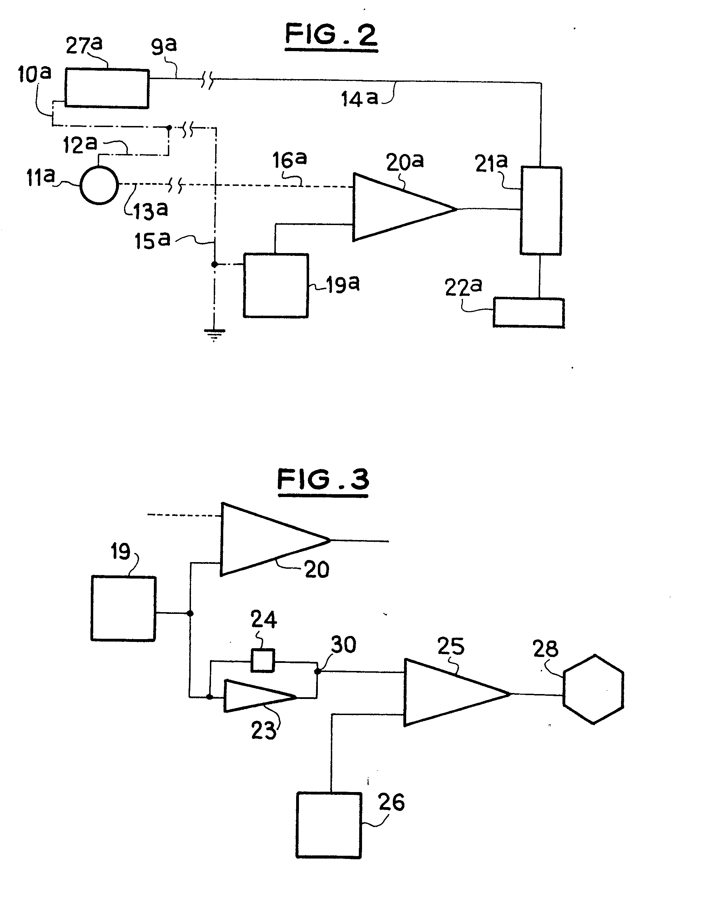

Chaque module élémentaire, tel que le module 17a du local A représenté à la figure 2, comporte un générateur de tension 19a dont la tension est déterminée en fonction de la température de consigne Ta désirée dans le local A, et qui est relié à l'une des entrées d'un comparateur de tension 20a dont l'autre entrée est reliée, par les fils 16a et 13a, à la sonde 11a de mesure de température. La sortie du comparateur 20a est reliée à un interrupteur électronique 21a

commandé par le comparateur, dont l'une des bornes est reliée à une source de tension 22a et l'autre borne au dispositif d'actionnement 27a du robinet 7a par les fils 9a et 14a. Les fils 15a, 10a et 12a relient la borne-masse du module élémentaire 17a avec le dispositif d'actionnement 27a du robinet 7a et avec la sonde 11a.

Le fonctionnement de l'installation est le suivant.

La chaudière 2 envoie de l'eau chaude de chauffage par la conduite 3 à chaque radiateur 1a, 1b par un robinet 7a, 7b réglant, par l'intermédiaire du dispositif d'actionnement 27a, 27b, le débit d'eau dans chaque radiateur, la conduite 6 assurant le retour de l'eau du radiateur à la chaudière 2. A l'aide du générateur 19a de tension variable du module élémentaire 17a, de commande de chauffage du local A, on détermine la température de consigne Ta du local A, voisine de celle qu'on désire maintenir dans le local A. Le générateur 19a crée alors un signal de tension Sa déterminé qui est envoyé au comparateur 20a. La sonde de mesure 11a située dans le local A envoie également au comparateur 20a un signal de tension sa correspondant à la température réelle ta du local A. Dans le comparateur 20a on compare les deux signaux et, lorsque le signal sa mesuré par la sonde devient supérieur au signal de consigne Sa, l'interrupteur électronique 21a est rendu conducteur, de sorte que la source de tension 22a commande, par l'intermédiaire du dispositif d'actionnement 27a, la fermeture du robinet 7a. Par contre, lorsque la température ta mesurée par la sonde 11a devient inférieure à la température de consigne Ta, l'interrupteur 21a coupe l'alimentation électrique du dispositif d'actionnement 27a, de sorte que le robinet 7a s'ouvre alors de lui-même, par exemple sous l'effet du ressort qui sollicite son clapet.

Bien que ce fonctionnement ait été décrit pour le chauffage du local A, le fonctionnement de l'installation en ce qui concerne le chauffage du local B est identique mais commandé par le module élémentaire 17b, la sonde 11b, le dispositif d'actionnement 27b et le robinet 7b. Le fonctionnement d'une installation de ce type en ce qui concerne les autres locaux équipés de la même façon que les locaux A et B, avec liaison avec un module 17 distinct, est lui aussi identique.

Grâce à l'invention, il est donc possible d'assurer la régulation du chauffage de chaque local en fonction de la température désirée dans ce local, tout en permettant un contrôle centralisé. En effet, on règle le chauffage de chaque local par le dispositif d'actionnement du robinet en fonction de la température du local mesurée par la sonde, mais aussi en fonction d'une température de consigne déterminée dans un endroit commun à tous les locaux ou à un groupe de locaux d'un immeuble par exemple.

Cette installation permet de tenir compte des fluctuations d'apports extérieurs de chaleur qui se produisent dans un local déterminé, sans influencer le chauffage dans les autres locaux. Le fait de centraliser les modules élémentaires avec détermination d'une température de consigne pour chaque local permet d'assurer un contrôle de cette température de consigne et d'éviter notamment que les occupants des locaux chauffés ne les règlent dans des conditions qui entraîneraient un gaspillage d'énergie. Ceci est particulièrement intéressant dans des lieux publics, des bureaux ou des immeubles d'habitation, où il est souhaitable de limiter les températures au niveau nécessaire. Des économies d'énergie peuvent donc être réalisées avec l'installation suivant l'invention.

Alors que dans l'exemple décrit ci-dessus chaque module élémentaire comporte un générateur de tension dont la tension, variable, est établie en fonction de la température de consigne du local correspondant, on peut utiliser un seul générateur de tension variable pour plusieurs modules élémentaires. Ainsi, une même température de consigne sera déterminée pour plusieurs locaux.

On peut également prévoir dans le poste de commande central 18 une ou plusieurs horloges de commande destinées à moduler les signaux des générateurs de tension variable de chacun des modules, ou d'un groupe de modules, en fonction de l'heure. Ainsi, un abaissement de la température de consigne peut être commandé par cette horloge, ou ces horloges, à certaines heures de la journée, par exemple la nuit. Avec plusieurs horloges on peut assigner à des groupes de locaux une modulation différente de la température en fonction de l'heure.

Selon l'invention un dispositif de comptage est adjoint à chaque module élémentaire donnant une indication permettant de répartir entre les locaux d'un immeuble la consommation d'énergie de la chaudière et les frais correspondants. Ce dispositif (représenté à la fig. 3) comporte un amplificateur 23 dont l'entrée est reliée à la sortie du générateur 19 de tension variable du module élémentaire. Le générateur de tension est relié également au comparateur 20 de ce module. En parallèle, sur l'amplificateur 23 est branchée une résistance électrique 24 dont la valeur ohmique est fonction de la surface de chauffe du radiateur du local correspondant. L'ensemble formé par la résistance électrique 24 et la sortie de l'amplificateur 23 est relié, en 30, à une première entrée d'un comparateur 25 dont l'autre entrée est reliée à un générateur de tension en dents de scie 26. La sortie de ce comparateur 25 est reliée à un compteur électromécanique 28. Ainsi, la tension à la première entrée du comparateur 25, fonction de la température de consigne et de la surface de chauffe du local, est comparée aux signaux délivrés par le générateur 26. Le compteur assure un comptage de la période de temps pendant laquelle cette tension est supérieure aux signaux de tension délivrés par le générateur 26. Si la température de consigne demandée est augmentée ou diminuée, cette période de temps de comptage augmente ou diminue respectivement et, d'autre part, il est tenu compte, par la résistance 24, de la surface de chauffe du radiateur 1 et par conséquent de la dimension du local.

On peut aussi assurer ce comptage, non pas en reliant l'amplificateur 23 à la sortie du générateur 19, mais à l'arrivée du fil reliant la sonde de température à l'élément modulaire. Dans ce cas, le comptage n'est plus fonction de la température de consigne mais de la température mesurée dans le local par la sonde.

Alors que selon l'invention, le dispositif de comptage est associé à chaque module élémentaire, on peut prévoir un seul dispositif de comptage pour plusieurs modules élémentaires. Dans ce cas, les modules comportent chacun un amplificateur 23 et une résistance 24 dont la valeur ohmique correspond à la surface de chauffe du radiateur correspondant, et les sorties 30 des ensembles formés dans les modules respectifs par l'amplificateur 23 et la résistance 24 sont branchées en parallèle sur la première entrée du comparateur 25. Il n'existe alors qu'un comparateur 25, qu'un générateur 26 et qu'un compteur électromécanique 28 pour plusieurs locaux.

De même il est possible de brancher en parallèle plusieurs ensembles comprenant une sonde, un amplificateur 23 et une résistance 24, avec une sortie commune 30, les éléments 25, 26, 28 étant eux aussi communs.

Bien entendu, dans une installation selon l'invention il est possible d'associer à chaque radiateur un robinet, dont le dispositif d'actionnement est commandé électriquement, selon l'invention, mais comportant en outre un bouton de commande manuelle qui permet seulement, soit la confirmation de l'ouverture déjà établie par la commande électrique, soit la fermeture du robinet dans le cas où la commande électrique provoquerait l'ouverture.

Il est également possible de combiner avec l'installation de chauffage central qui a été décrite tout autre dispositif de régulation, agissant sur la chaudière ou sur l'installation de chauffage en amont des robinets de radiateur. Par exemple il est possible de modifier la température de l'eau alimentant les radiateurs en fonction de la température de l'air extérieur aux locaux à chauffer, température mesurée par une sonde extérieure.

Certains locaux peuvent évidemment comporter plusieurs radiateurs et des dispositifs d'actionnement en nombre correspondant, associant à une seule sonde et reliés à un même module.

De même, dans le dispositif de comptage la résistance 24 peut être représentative de la surface de chauffe de plusieurs locaux, avec un seul amplificateur 23 et un générateur 19 unique.

## Revendications

1. Installation de chauffage central comportant, répartis dans divers locaux (A, B), plusieurs radiateurs (1a, 1b) dont chacun est muni d'un robinet (7a, 7b) de réglage du débit d'eau chaude soumis à l'action d'un dispositif d'actionnement (27a, 27b) auquel est associée une sonde de température (11a, 11b) située dans un local équipé d'au moins un radiateur, le ou les dispositifs d'actionnement et la sonde d'un même local étant reliés par un poste de commande central (18), unique, comprenant des moyens pour déterminer la température de consigne (Ta) de chaque local et pour émettre un signal correspondant, ainsi que des moyens (20, 20a, 20b) pour comparer un signal de température émis par la sonde (11a, 11b) avec le signal de température de consigne, et pour agir, en fonction de cette comparaison, sur le ou les robinets de réglage (7a, 7b) par l'intermédiaire du ou des dispositifs d'actionnement (27a, 27b), caractérisée en ce que, à chaque ensemble comprenant une sonde (11a, 11b) et le ou les dispositifs d'actionnement (27a, 27b) de radiateur d'un même local correspond un module distinct (17a, 17b) du poste de commande (18) comprenant un comparateur (20, 20a, 20b), et en ce que, à chaque module (17a, 17b), ou à chaque groupe de modules, est adjoint un dispositif de comptage (28) donnant une indication pour les locaux chauffés de l'énergie consommée pour la production d'eau chaude.

2. Installation suivant la revendication 1, caractérisée en ce que chaque module (17a, 17b) comporte un émetteur de signal de température de consigne (19a, 19b).

3. Installation suivant la revendication 1, caractérisée en ce qu'un même émetteur de signal de température de consigne (19a, 19b) est commun à plusieurs modules (17a, 17b).

4. Installation suivant l'une des revendications 1 à 3, dans laquelle le poste de commande (18) comporte au moins une horloge, caractérisée en ce que l'horloge est prévue pour moduler, en fonction de l'heure, les signaux de température de consigne produits par les émetteurs (19a, 19b) de chacun des modules (17a, 17b) ou d'un groupe de modules.

5. Installation suivant l'une des revendications 2 à 4, caractérisée en ce que l'émetteur du signal de température de consigne (19a, 19b) est un générateur de tension variable dont la tension est représentative de cette température.

6. Installation suivant la revendication 5, caractérisée en ce que le générateur de tension variable (19a, 19b) d'un module (17a, 17b), ou d'un groupe de modules, est relié à l'entrée d'un amplificateur (23), en parallèle duquel est branchée au moins une résistance (24) représentative de la surface de chauffe du radiateur (1a, 1b) correspondant, ou d'un groupe de radiateurs, la sortie (30) commune à l'amplificateur (23) et à la résistance (24) étant connectée à l'une des entrées d'un comparateur (25) dont l'autre entrée est connectée à un générateur de tension en dents de scie (26) et dont la sortie est reliée à un compteur électromécanique (28).

7. Installation suivant la revendication 1, caractérisée en ce que la sonde (11a, 11b) associée à au moins un radiateur (1a, 1b) est reliée à l'entrée d'un amplificateur (23), en parallèle duquel est branchée une résistance (24) représentative de la surface de chauffe du radiateur (1a, 1b) ou des radiateurs, la sortie (30) commune à l'amplificateur (23) et à la résistance (24) étant connectée à l'une des entrées d'un comparateur (25), éventuellement commun aux sondes respectives de plusieurs locaux, dont l'autre entrée est connectée à un générateur de tension en dents de scie (26) et dont la sortie est reliée à un compteur électromécanique (28).

8. Installation suivant l'une des revendications 1 à 7, caractérisée en ce que le dispositif d'actionnement de chaque robinet (7a, 7b) comporte un bilame soumis à l'action d'une résistance électrique capable, en chauffant le bilame, de le déformer en fermant ainsi, à l'encontre de l'action d'un ressort, le clapet du robinet.

## Claims

1. A central heating installation comprising, arranged in various premises (A, B) a plurality of radiators (1a, 1b) each of which radiators is provided with a valve (7a, 7b) for regulating the flow of hot water subjected to the action of an actuating device (27a, 27b) with which is associated a temperature sensor (11a, 11b) located in a premises provided with at least one radiator, the actuating device or devices and the sensor of the same premises being connected through a single central control station (18) comprising means for determining the set temperature (Ta) of each premises and for producing a corresponding signal, and means (20, 20a, 20b) for comparing a temperature signal produced by the sensor (11a, 11b) with the set temperature signal, and for acting, in accordance with this comparison, on the regulating valve or valves (7a, 7b) through the actuating device or devices (27a, 27b) characterised in that there corresponds to each unit comprising a sensor (11a, 11b) and the actuating device or devices (27a, 27b) for a radiator of the same premises, a distinct module (17a, 17b) of the control station (18) comprising a comparator (20, 20a, 20b), and in that there is added to each module (17a, 17b), or to each group of modules, a counting device (28) which gives an indication, in respect of the heated premises, of the energy consumed for the production of hot water.

2. An installation according to claim 1, characterised in that each module (17a, 17b) comprises an emitter of the set temperature signal (19a, 19b).

3. An installation according to claim 1, characterised in that the same set temperature signal emitter (19a, 19b) is common to a plurality of modules (17a, 17b).

4. An installation according to claim 1, 2 or 3, wherein the control station (18) comprises at least one clock, characterised in that the clock is provided for modulating, as a function of the hour, the set temperature signals produced by the emitters (19a, 19b) of each of the modules (17a, 17b) or of a group of modules.

5. An installation according to any one of the claims 2 to 4, characterised in that the set temperature signal emitter (19a, 19b) is a variable voltage generator whose voltage represents said temperature.

6. An installation according to claim 5, characterised in that the variable voltage generator (19a, 19b) of a module (17a, 17b) or of a group of modules, is connected to the input of an amplifier (23), to which amplifier is connected in parallel at least one resistor (24) which represents the heating surface area of the corresponding radiator (1a, 1b), or of a group of radiators, the output (30) common to the amplifier (23) and the resistor (24) being connected to one of the inputs of a comparator (25) whose other input is connected to a saw-tooth voltage generator (26) and whose output is connected to an electromechanical counter (28).

7. An installation according to claim 1, characterised in that the sensor (11a, 11b) associated with at least one radiator (1a, 1b) is connected to the input of an amplifier (23), to which amplifier is connected in parallel a resistor (25) which represents the heating surface area of the radiator (1a, 1b), or of the radiators, the output (30) common to the amplifier (23) and to the resistor (24) being connected to one of the inputs of a comparator (25), which may possibly be common to the respective sensors of a plurality of premises, the other input of the comparator being connected to a saw-tooth voltage generator (26) and the output of the comparator being connected to an electromechanical counter (28).

8. An installation according to any one of the claims 1 to 7, wherein the actuating device of each valve (7a, 7b) comprises a bi-metal element subjected to the action of an electric resistor which is capable, in heating the bi-metal element, of deforming it and thus closing the closure member of the valve in opposition to the action of a spring.

## Ansprüche

1. Sammelheizanlage, die, verteilt in verschiedenen Räumen oder Zimmern (A, B) über mehrere Radiatoren (1a, 1b) verfügt, von denen jeder mit einem Ventil (7a, 7b) zum Regeln des Warmwasserdurchsatzes verfügt, welches der Wirkung einer Betätigungseinrichtung (27a, 27b) ausgesetzt ist, welcher eine Temperatursonde (11a, 11b) in einem mit wenigstens einem Radiator ausgestatteten Raum zugeordnet ist, wobei die Betätigungsvorrichtung (en) und die Sonde ein und des gleichen Raumes über eine zentrale einzige Steuerstation (18) verbunden sind ; mit Einrichtungen zum Bestimmen der Sollwerttemperatur (Ta) jedes Raumes und zur Abgabe eines entsprechenden Signals sowie Einrichtungen (20, 20a, 20b) zum Vergleichen eines von der Sonde (11a, 11b) ausgesandten Temperatursignals mit dem Temperatursollwertsignal und um als Funktion dieses Vergleichs auf den oder die Regelventile (7a, 7b) über die Betätigungseinrichtung(en) (27a, 27b) einzuwirken, dadurch gekennzeichnet, daß jeder Anordnung, umfassend eine Sonde (11a, 11b) und die Betätigungseinrichtung(en) (27a, 27b) des Radiators ein und des gleichen Raums ein unterschiedlicher Modul (17a, 17b) der Steuerstation (18) entspricht, welche einen Komparator (20, 20a, 20b) umfaßt und daß jeder Modul (17a, 17b) oder jede Gruppe von Moduln über eine Zähleinrichtung (28) verfügt, die für die beheizten Räume eine Anzeige für die durch die Erzeugung von Warmwasser verbrauchte Energie gibt.

2. Anlage nach Anspruch 1, dadurch gekennzeichnet, daß jeder Modul (17a, 17b) einen Temperatursollwertsignalgeber (19a, 19b) umfaßt.

3. Anlage nach Anspruch 1, dadurch gekennzeichnet, daß ein und der gleiche Sollwerttemperaturgeber (19a, 19b) mehreren Moduln (17a, 17b) gemeinsam ist.

4. Anlage nach einem der Ansprüche 1 bis 3, wobei die Steuerstation (18) wenigstens einen Taktgeber umfaßt, dadurch gekennzeichnet, daß der Taktgeber vorgesehen ist, um als Funktion der (Tages) Zeit die Temperatursollwertsignale zu modulieren, welche von den Gebern (19a, 19b) jedes der Moduln (17a, 17b) oder einer Gruppe von Moduln erzeugt werden.

5. Anlage nach einem der Ansprüche 2 bis 4, dadurch gekennzeichnet, daß der Sollwerttemperaturgeber (19a, 19b) ein variabler Spannungsgenerator ist, dessen Spannung repräsentativ für diese Temperatur ist. .

6. Anlage nach Anspruch 5, dadurch gekennzeichnet, daß der variable Spannungsgenerator (19a, 19b) eines Moduls (17a, 17b) oder einer Gruppe von Moduln mit dem Eingang eines Verstärkers (23) verbunden ist, zu dem parallel wenigstens ein Widerstand (24) geschaltet ist, der für die entsprechende Heizfläche (1a, 1b) oder einer Gruppe von Radiatoren repräsentativ ist, wobei der Verstärker (23) und Widerstand (24) gemeinsame Ausgang (30) mit einem der Eingänge eines Komparators (25) verbunden ist, dessen anderer Eingang mit einem Sägezahnspannungsgenerator (26) verbunden ist und dessen Ausgang mit einem elektromechanischen Zähler (28) verbunden ist.

7. Anlage nach Anspruch 1, dadurch gekennzeichnet, daß die wenigstens einem Radiator (1a, 1b) zugeordnete Sonde (11a, 11b) mit dem Eingang eines Verstärkers (23) verbunden ist, parallel zu dem ein Widerstand (24), der für die Heizfläche des Radiators (1a, 1b) oder der Radiator gelegt ist, repräsentativ ist, wobei der gemeinsame Ausgang (30) von Verstärker (23) und Widerstand (24) an einen der Eingänge eines Komparators gelegt ist, der gegebenenfalls den jeweiligen Sonden verschiedener Räume gemeinsam ist und dessen anderer Eingang mit einem Sägezahnspannungsgenerator (26) verbunden ist und dessen Ausgang mit einem elektromechanischen Zähler (28) verbunden ist.

8. Anlage nach einem der Ansprüche 1 bis 7, dadurch gekennzeichnet, daß die Betätigungseinrichtung jedes Ventils (7a, 7b) eine Bimetallausbildung aufweist, die der Wirkung eines elektrischen Widerstands ausgesetzt ist, der in der Lage ist, unter Erwärmen der Bimetallausbildung, sich zu verformen und so entgegen der Wirkung einer Feder die Klappe des Ventils zu schließen.

FIG.1

## FIG.2

## FIG.3